# EUROPEAN PATENT APPLICATION

(11) **EP 4 467 097 A1**
(43) Date of publication of application: **27.11.2024**
(21) Application number: 23743388.3
(22) Date of filing: 03.01.2023
(51) Int. Cl.: A61C 7/08, B33Y 80/00

(54) **TRANSPARENT ORTHODONTIC APPLIANCE AND MANUFACTURING METHOD THEREOF**

(30) Priority: 20.01.2022 KR 20220008530
(71) Applicant: ODS Co., Ltd, Incheon 21990 (KR)
(72) Inventor: PARK, Sung Won, Incheon 22003 (KR)
(74) Representative: Patentanwälte Ruff, Wilhelm, Beier, Dauster & Partner mbB
(86) International application number: PCT/KR2023/000113
(87) International publication number: WO 2023/140537

(57) **Abstract**

Disclosed are a transparent orthodontic device and method of preparing the same. The disclosed transparent orthodontic device comprises a tooth side contacting portion, and the tooth side contacting portion comprises a concave tooth contacting portion and a convex tooth non-contacting portion which are disposed opposite each other.

## Description

### [Technical Field]

Disclosed are a transparent orthodontic device and method of preparing the same. More specifica lly, a transparent orthodontic device with an excellent orthodontic effect and a method of preparing the sa me are disclosed.

### [Background Art]

Transparent orthodontic devices provide better aesthetics and cause less discomfort in everyday life compared to conventional fixed orthodontic appliances. However, they are unhygienic due to multiple uses and cause pain and inconvenience during use due to large tooth movement distances.

In a novel digital method for preparing a transparent orthodontic device based on 3D scanning and 3D printing technology, a 3D image of a patient's dental arches is obtained using a scanner, then a virtual dental model is set up through CAD work by moving virtual teeth in the desired direction in phases in a manner such that the teeth are not migrated excessively. Then, without producing a physical dental model, a 3D printer is used to directly print a transparent orthodontic device suiting the virtual dental model that has been set up and applied to a patient. This method does not use a physical dental model, facilitating minor changes to the movement distances of the virtual teeth that have been set up, and has the benefits of higher precision and less deformation when the actual transparent orthodontic device is prepared.

### [Detailed Description of the Invention]

### [Technical Problem]

A first embodiment of the present invention provides a transparent orthodontic device having excellent orthodontic effect.

Another embodiment of the present invention provides a method for preparing the transparent orthodontic device.

### [Technical Solution]

One aspect of the present invention provides a transparent orthodontic device comprising a tooth side contacting portion, the tooth side contacting portion comprising a concave tooth contacting portion and a convex tooth non-contacting portion which are disposed opposite each other.

The tooth side contacting portion may be provided in a manner such that the lower edge thereof is positioned on the inside of a perpendicular line traversing the upper edge thereof.

The tooth contacting portion may be provided to have a shape opposite that of the side of a natural tooth to allow for close contact with the entirety of the side of the natural tooth.

The tooth side contacting portion may comprise a tooth inner side contacting portion and a tooth outer side contacting portion disposed to face the tooth inner side contacting portion with a certain distance of separation,
And the tooth inner side contacting portion and the tooth outer side contacting portion may respectively comprise a convex tooth contacting portion and a convex tooth non-contacting portion.

Any one of the tooth inner side contacting portions and the tooth outer side contacting portion may be provided to serve as an action member that moves a tooth, and the other may be provided to serve as a stationary member that holds the tooth in place.

The transparent orthodontic device may further comprise a tooth top contacting portion.

The tooth top contacting portion may comprise at least one top opening.

The transparent orthodontic device may not comprise a tooth top contacting portion.

The tooth side contacting portion may comprise a tooth inner side contacting portion, but not comprise a tooth outer side contacting portion.

The tooth side contacting portion may comprise a tooth outer side contacting portion, but not comprise a tooth inner side contacting portion.

Another aspect of the present invention provides a method for preparing a transparent orthodontic device, the method comprising a step S10 of printing the transparent orthodontic device using a 3D printer, wherein the transparent orthodontic device comprises a tooth side contacting portion, the tooth side contacting portion comprising a concave tooth contacting portion and a convex tooth non-contacting portion which are disposed opposite each other.

In step S 10, a transparent orthodontic device whose top is at least partially open may be printed.

In the method for preparing a transparent orthodontic device, a transparent orthodontic device whose top is entirely closed may be printed in Step S10, in which case the method may further comprise a step S20 of at least partially opening up the top of the transparent orthodontic device.

### [Benefit(s) of the Invention]

The transparent orthodontic device according to an embodiment of the present invention, providing outstanding contact with all parts of a tooth, can improve orthodontic effectiveness.

### [Brief Description of the Drawings]

FIG. 1 is a cross-sectional drawing of one side of a transparent orthodontic device according to prior art.
FIG. 2 is a cross-sectional drawing of one side of the transparent orthodontic device according to a first embodiment of the present invention.
FIG. 3 is a drawing to describe a method for preparing the transparent orthodontic device according to a second embodiment of the present invention, by cutting open the top of the transparent orthodontic device of FIG. 2.
FIG. 4a is a skew drawing of the transparent orthodontic device according to a second embodiment of the present invention.
FIG. 4b is a plan drawing of the transparent orthodontic device of FIG. 4a.
FIG. 5a is a cross-sectional drawing of one side of the transparent orthodontic device of FIG. 4a.
FIG. 5b is a cross-sectional drawing of the opposite side of the transparent orthodontic device of FIG. 4a.
FIG. 6a is a skew drawing of the transparent orthodontic device according to a third embodiment of the present invention.
FIG. 6b is a plan drawing of the transparent orthodontic device of FIG. 6a.
FIG. 7a is a skew drawing of the transparent orthodontic device according to a fourth embodiment of the present invention.
FIG. 7b is a plan drawing of the transparent orthodontic device of FIG. 7a.
FIG. 8a is a skew drawing of the transparent orthodontic device according to a fifth embodiment of the present invention.
FIG. 8b is a plan drawing of the transparent orthodontic device of FIG. 8a.
FIG. 9a is a skew drawing of the transparent orthodontic device according to a sixth embodiment of the present invention.
FIG. 9b is a plan drawing of the transparent orthodontic device of FIG. 9a.

### [Best mode(s) for carrying out the invention]

The present invention is a transparent orthodontic device comprising a tooth side contacting portion, the tooth side contacting portion comprising a concave tooth contacting portion and a convex tooth non-contacting portion which are disposed opposite each other.

### [Embodiments]

In the following, the transparent orthodontic device according to one embodiment of the present invention will be described in detail with reference to the drawings.

In the present specification, "tooth side contacting portion" means a portion that is in contact with a side of a tooth.

Further, in the present specification, "tooth inner side contacting portion" means a portion that is in contact with a lingual side of a tooth.

Further, in the present specification, "tooth outer side contacting portion" means a portion that is in contact with a buccal side of a tooth.

Further, in the present specification, "tooth contacting portion" means a face that is in contact with a tooth.

Further, in the present specification, "tooth non-contacting portion" means a face that is not in contact with a tooth.

Further, in the present invention, "perpendicular line" means a straight line whose direction is pa rallel with the direction of gravity when the transparent orthodontic device is placed parallel to a flat surfa ce in the attitude in which it is mounted on the teeth.

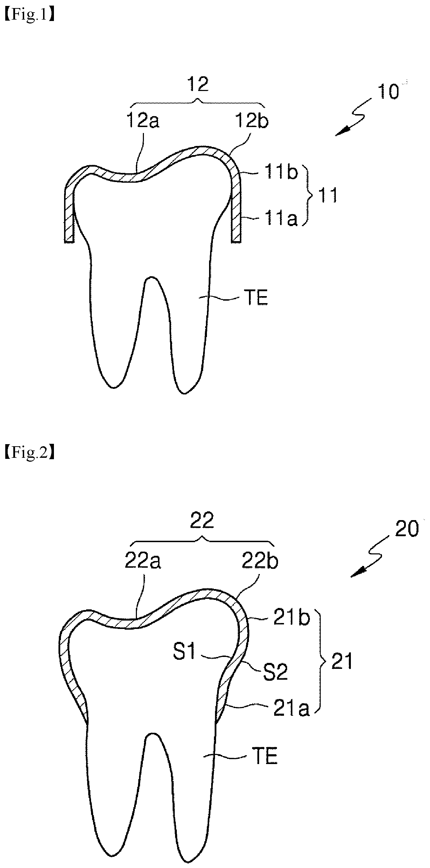

*FIG. 1 is a cross-sectional drawing of one side of a transparent orthodontic device 10 according to prior art.

Referring to FIG. 1, a transparent orthodontic device 10 according to prior art comprises a tooth side contacting portion 11 and a tooth top contacting portion 12.

The tooth side contacting portion 11 comprises a side bottom portion 11a and a side top portion 11b.

Further, the tooth side contacting portion 11 is provided in a manner such that a perpendicular line traversing the upper edge thereof also traverses the lower edge thereof. Specifically, the tooth side contacting portion 11 is provided in a manner such that a perpendicular line is in contact with the upper edge of the side top portion 11b and the lower edge of the side bottom portion 11a.

The tooth top contacting portion 12 comprises a top face center portion 12a and a top face side portion 12b.

Whereas the side top portion 11b, top center portion 12a and the top side portion 12b are in close contact with the tooth TE, at least part of the side bottom portion 11a is separated from and not in contact with the tooth TE. Accordingly, when the transparent orthodontic device 10 is mounted on the tooth TE, because the side top portion 11b is able to push against the side top portion of the tooth TE but the side bottom portion 11a is unable to push laterally against the side bottom portion of the tooth TE, the entirety of the tooth TE is not moved, with only the top portion of the tooth TE moving and the bottom portion of the tooth TE not moving. This causes a problem of not being able to align the teeth as originally intended, instead causing misalignment of the teeth.

FIG. 2 is a cross-sectional drawing of one side of the transparent orthodontic device 20 according to a first embodiment of the present invention.

Referring to FIG. 2, the orthodontic device 20 according to a first embodiment of the present invention comprises a tooth side contacting portion 21 and a tooth top contacting portion 22.

The tooth side contacting portion 21 may comprise a tooth contacting portion S1 and a tooth non-contacting portion S2.

The tooth contacting portion S1 and the tooth non-contacting portion S2 may be disposed opposite each other. For example, the tooth contacting portion S1 may be disposed on one side of a tooth TE, and the tooth non-contacting portion S2 may be disposed on the opposite side of the tooth TE.

Further, the tooth contacting portion S1 may be provided to be concave, and the tooth non-contacting portion S2 may be provided to be convex.

Further, the tooth contacting portion S1 may be provided to have a shape opposite that of the side face of the natural tooth, so as to be able to be in close contact with the entirety of the side face of the natural tooth.

Further, the tooth side contacting portion 21 may comprise a side bottom portion 21a and a side top portion 21b.

Further, the tooth side contacting portion 21 may be provided in a manner such that the lower edge thereof is positioned on the inside of a perpendicular line that traverses the upper edge thereof (that is, in the direction of the tooth contacting portion S 1). Specifically, the tooth side contacting portion 21 may be provided in a manner such that the lower edge of the side face bottom portion 21a is positioned on the inside of a perpendicular line which traverses the upper edge of the side face top portion 21b.

The tooth top contacting portion 22 may comprise a top face center portion 22a and a top face side portion 22b.

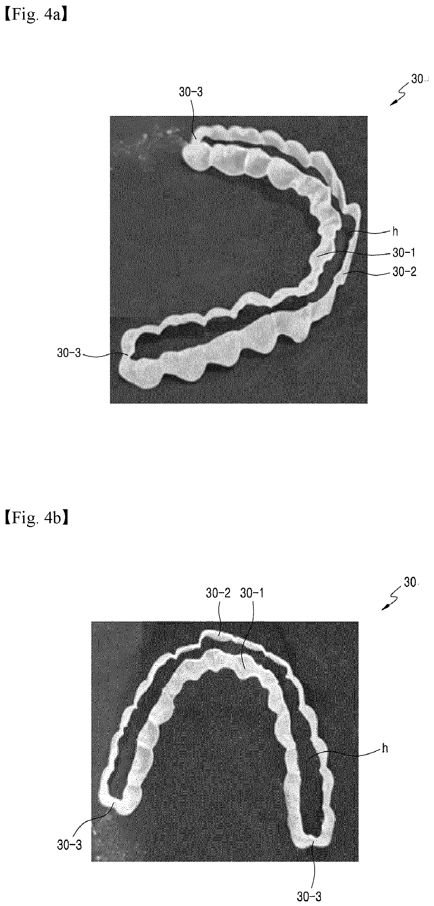

Further, the tooth top contacting portion 22 may, as illustrated in FIG. 4a, FIG. 4b, FIG. 6a, FIG. 6b, FIG. 7a and FIG. 7b, comprise at least one top opening h, h1, h2, h3.

The interface between the side face top portion 21b and the top face side portion 22b may correspond to the cervical ridge of a natural tooth.

In addition to the side face top portion 21b, top face center portion 22a and the top face side portion 22b, the side face bottom portion 21a may also be in close contact with the tooth TE. Accordingly, when the transparent orthodontic device 20 is mounted on the tooth TE, the side face top portion 21b pushes laterally against the top portion of the side face of the tooth TE, while simultaneously the side face bottom portion 21a pushes laterally against the bottom portion of the side face of the booth TE. The entirety of the tooth is moved, with the top portion and the bottom portion of the tooth TE being moved together, achieving alignment of the tooth TE as originally intended.

The tooth side contacting portion 21 and tooth top face contacting portion 22 which are provided as described in the above may be formed separately for each tooth, and [the transparent orthodontic device] may comprise a plurality of basic tooth side contacting portions and a plurality of basic tooth top face contacting portions which are linked to each other.

Further, there is no particular limitation on the material, method of preparation and color of the transparent orthodontic device 20, and various materials, methods and colors may be used for its preparation.

Further, the transparent orthodontic device 20 may further comprise, at the side face bottom portion 21a, concave and/or convex structures for detaching from and/or pushing toward a natural tooth.

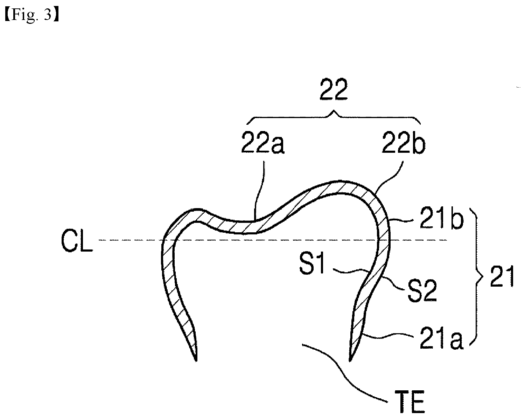

FIG. 3 is a drawing to describe a method for preparing the transparent orthodontic device 30 according to a second embodiment of the present invention, by cutting open the top of the transparent orthodontic device 20 of FIG. 2, FIG. 4a is a skew drawing of the transparent orthodontic device 30 according to a second embodiment of the present invention, and FIG. 4b is a plan drawing of the transparent orthodontic device 30 of FIG. 4a.

Referring to FIG. 3, a transparent orthodontic device 30 may be prepared by cutting the transparent orthodontic device 20 illustrated in FIG. 2 along a cutting line CL. Here, the cutting line CL may be a line corresponding to a height of the upper edge of the certical ridge of a natural tooth.

Referring to FIG. 4a and FIG. 4b, the transparent orthodontic device according to a second embodiment of the present invention comprises a tooth inner side contacting portion 30-1, a tooth outer side contacting portion 30-2 and a connecting portion 30-3.

The tooth outer side contacting portion 30-2 may be disposed to oppose the tooth inner side contacting portion 30-1 with a certain distance of separation.

The tooth inner side contacting portion 30-1 and the tooth outer side contacting portion 30-2 may respectively comprise a concave tooth contacting face and a convex tooth non-contacting face. Specifically, as the configuration and action of the tooth inner side contacting portion 30-1 and the tooth outer side contacting portion 30-2 are similar or identical to the configuration and action of the tooth side contacting portion 11 of the transparent orthodontic device 20 illustrated in FIG. 2, detailed description of these shall be omitted herein.

The connecting portion 30-3 performs a role of connecting the tooth inner side contacting portion 30-1 to the tooth outside side contacting portion 30-2.

Further, the transparent orthodontic device 30 may not comprise a tooth top face contacting portion. Specifically, the entirety of the upper face of the transparent orthodontic device 30 may be open, with the exception of the connecting portion 30-3. That is, the transparent orthodontic device 30 may comprise a single upper opening h extending in a U-shape on the top face thereof.

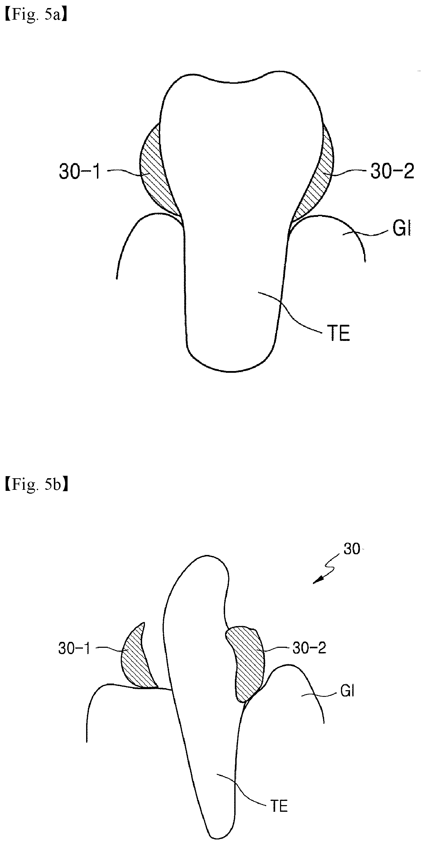

FIG. 5a is a cross-sectional drawing of one side of the transparent orthodontic device 30 of FIG. 4a, FIG. 5b is a cross-sectional drawing of the opposite side of the transparent orthodontic device 30 of FIG. 4a. Specifically, FIG. 5a and FIG. 5b are drawings illustrating the transparent orthodontic device 30 of FIG. 4a when mounted on a tooth. In FIG. 5a and FIG. 5b, TE represents a tooth, and GI represents a gingiva.

Referring to FIG. 5a and FIG. 5b, any one of the tooth inner side contacting portion 30-1 and the tooth outer side contacting portion may be provided to serve as an action member that moves a tooth, and the other may be provided to serve as a stationary member that holds the tooth in place.

Specifically, referring to FIG. 5a, the tooth inner side contacting portion 30-1 may serve as an action member and the tooth outer side contacting portion 30-2 may serve as a stationary member, in which case the tooth inner side contacting portion 30-1 may be comprised of a material having relatively low rigidity and high elasticity, while the tooth outer side contacting portion 30-2 may be comprised of a material having relatively high rigidity and low elasticity.

Further, referring to FIG. 5b, the tooth inner side contacting portion 30-1 may serve as a stationary member and the tooth outer side contacting portion 30-2 may serve as an action member, in which case the tooth inner side contacting portion 30-1 may be disposed to be separated from the tooth TE.

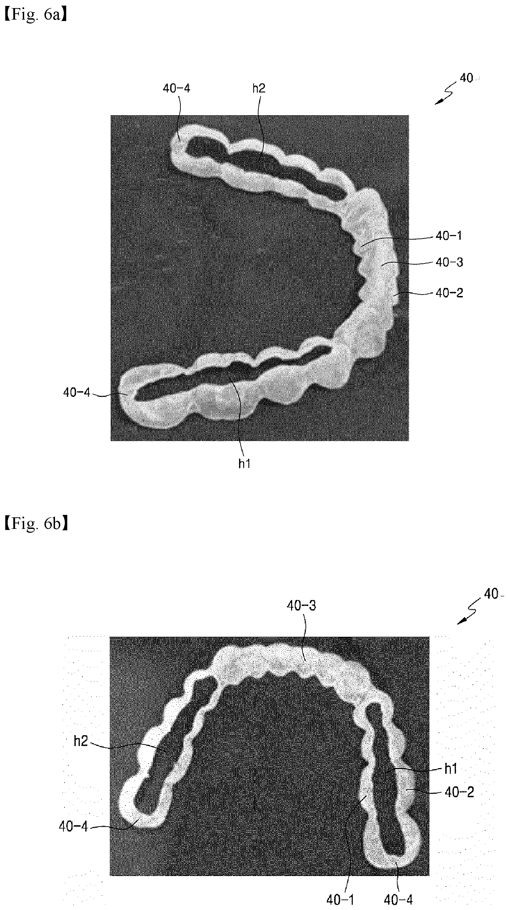

FIG. 6a is a skew drawing of the transparent orthodontic device 40 according to a third embodiment of the present invention. FIG. 6b is a plan drawing of the transparent orthodontic device 40 of FIG. 6a.

Referring to FIG. 6a and FIG. 6b, the transparent orthodontic device 40 according to a third embodiment of the present invention comprises a tooth inner side contacting portion 40-1, a tooth outer side contacting portion 40-2, a tooth top face contacting portion 40-3, and a connecting portion 40-4.

The difference between the transparent orthodontic device 40 of FIG. 6a and FIG. 6b and the transparent orthodontic device 30 of FIG. 4a and FIG. 4b is that the top opening h1, h2 is divided into two openings instead of being a single opening. Specifically, the transparent orthodontic device 40 may comprise a single tooth top face contacting portion 40-3 at its longitudinal middle portion, and comprise two of the connecting portions 40-4, one at each end.

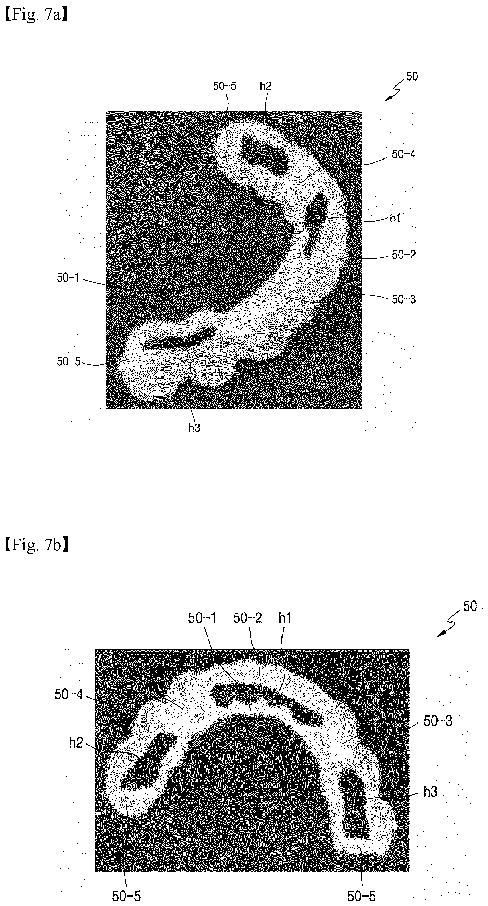

FIG. 7a is a skew drawing of the transparent orthodontic device 50 according to a fourth embodiment of the present invention. FIG. 7b is a plan drawing of the transparent orthodontic device 50 of FIG. 7a.

Referring to FIG. 7a and FIG. 7b, the transparent orthodontic device 50 according to a fourth embodiment of the present invention comprises a tooth inner side contacting portion 50-1, a tooth outer side contacting portion 50-2, a tooth top face contacting portion 50-3, 50-4, and a connecting portion 50-5.

The difference between the transparent orthodontic device 50 of FIG. 7a and FIG. 7b and the transparent orthodontic device 30 of FIG. 4a and FIG. 4b is that the top opening h1, h2, h3 is divided into three openings instead of being a single opening. Specifically, the transparent orthodontic device 50 may comprise two tooth top face contacting portions 50-3, 50-4 disposed with a distance of separation between the longitudinal ends, and comprise two of the connecting portions 50-5, one at each end.

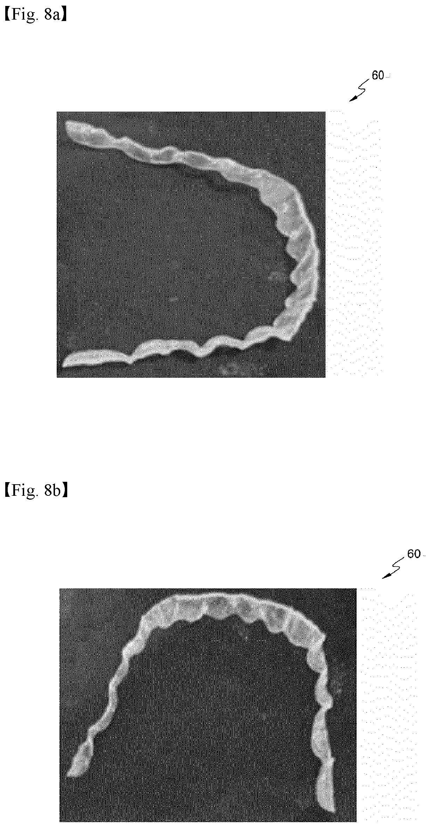

FIG. 8a is a skew drawing of the transparent orthodontic 60 device according to a fifth embodiment of the present invention, and FIG. 8b is a plan drawing of the transparent orthodontic device 60 of FIG. 8a.

Referring to FIG. 8a and FIG. 8b, the transparent orthodontic device 60 according to a fifth embodiment of the present invention comprises a tooth inner side contacting portion but does not comprise a tooth top face contacting portion and a tooth outer side contacting portion. That is, the transparent orthodontic device 60 may be comprised solely by a tooth inner side contacting portion.

The transparent orthodontic device 60 having the above configuration may be a lingual side transparent orthodontic device which is inserted only in the lingual side of the dental arch to adjust a tooth.

Further, the material of the transparent orthodontic device 60 may be titanium, but the present invention is not limited hereto.

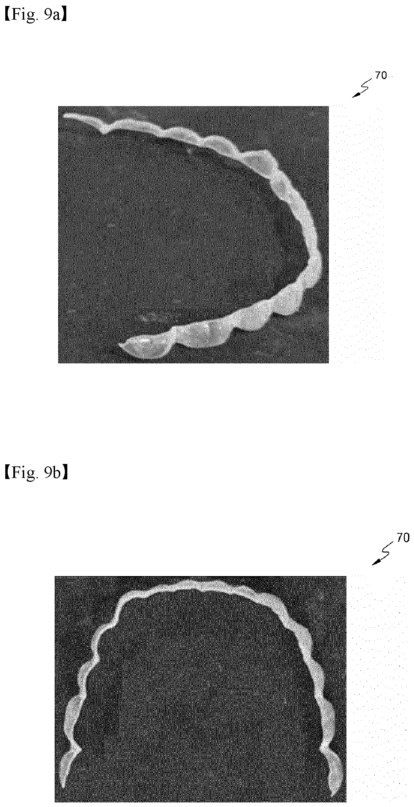

FIG. 9a is a skew drawing of the transparent orthodontic device 70 according to a sixth embodiment of the present invention, and FIG. 9b is a plan drawing of the transparent orthodontic device 70 of FIG. 9a.

Referring to FIG. 9a and FIG. 9b, the transparent orthodontic device 70 according to a sixth embodiment of the present invention comprises a tooth outer side contacting portion but does not comprise a tooth top face contacting portion and a tooth inner side contacting portion. That is, the transparent orthodontic device 70 may be comprised solely by a tooth outer side contacting portion.

The transparent orthodontic device 70 having the above configuration may be buccal side transparent orthodontic device which is inserted only in the buccal side of the dental arch to adjust a tooth.

Further, the transparent orthodontic devices 20 - 70 described in the above may have a thickness of 0.2 to 2mm (for example, 0.2 to 0.5mm). Accordingly, the transparent orthodontic devices 20-70, having a small thickness, may reduce discomfort felt by a patient when mounted on the teeth of the patient. In the present specification, "transparent orthodontic device thickness" refers to the distance between the inner wall (that is, the tooth-side face) and the outer wall (that is, the face opposite the tooth).

In the following, a method for preparing the transparent orthodontic device according to one embodiment of the present invention will be described in detail.

The method for preparing the transparent orthodontic device according to one embodiment of the present invention comprises a step S10 of using a 3D printer to print a transparent orthodontic device.

The transparent orthodontic device may comprise a tooth side contacting portion.

The transparent orthodontic device may comprise a tooth contacting portion and a tooth non-contacting portion.

The tooth contacting portion and the tooth non-contacting portion may be disposed to oppose each other. That is, the tooth contacting portion may be an inner face and the tooth non-contacting portion may be an outer face.

The tooth contacting portion may be concave, and the tooth non-contacting portion may be convex.

In the step S 10, a transparent orthodontic device whose top is at least partially open may be printed.

Further, a transparent orthodontic device whose entire top is closed may be printed in the step S10, in which case the method may further comprise a step S20 of at least partially opening up the top of the transparent orthodontic device. Specifically, as illustrated in FIG. 3, the transparent orthodontic device 30 illustrated in FIG. 2 may be printed using a 3D printer, then a cut may be made following a cutting line CL to prepare a transparent orthodontic device whose top is at least partially open. In such case, the cutting line CL may be a line corresponding to the height of the top of the cervical ridge of a natural tooth.

Further, the method described above for preparing a transparent orthodontic device may provide a transparent orthodontic device having a thickness of 0.2 to 2mm (for example, 0.2 to 0.5mm). Accordingly, the method for preparing a transparent orthodontic device is able to provide a transparent orthodontic device having a small thickness and able to reduce discomfort felt by a patient when mounted on the teeth of the patient.

Whereas preferred embodiments of the present invention have been described with reference to the drawings in the above, these embodiments are intended to exemplify the present invention only, and a person having ordinary skill in the art shall understand that various modifications thereof and other equivalent embodiments are possible. Accordingly, the scope of protection of the present invention shall be determined by the scope of the appended claims.

### [Industrial Applicability]

The transparent orthodontic device according to the present invention provides excellent contact with the tooth, improving orthodontic effectiveness, and has very high potential for utilization in the field of orthodontics.

## Claims

1. A transparent orthodontic device comprising a tooth side contacting portion, wherein the tooth side contacting portion comprises a concave tooth contacting portion and a tooth non-contacting portion disposed opposite each other.

2. The transparent orthodontic device of Claim 1, wherein the tooth side contacting portion is disposed in a manner such that a lower edge thereof is positioned on the inside of a perpendicular line traversing an upper edge thereof.

3. The transparent orthodontic device of Claim 2, wherein the tooth contacting portion is provided to have a shape opposite that of the side of a natural tooth to allow for close contact with the entirety of the side of the natural tooth.

4. The transparent orthodontic device of Claim 1, wherein tooth side contacting portion comprises a tooth inner side contacting portion and a tooth outer side contacting portion disposed to face the tooth inner side contacting portion with a certain distance of separation, and the tooth inner side contacting portion and the tooth outer side contacting portion respectively comprise a convex tooth contacting portion and a convex tooth non-contacting portion.

5. The transparent orthodontic device of Claim 4, wherein any one of the tooth inner side contacting portions and the tooth outer side contacting portion is provided to serve as an action member that moves a tooth, and the other is provided to serve as a stationary member that holds the tooth in place.

6. The transparent orthodontic device of Claim 1, further comprising a tooth top face contacting portion.

7. The transparent orthodontic device of Claim 6, wherein the tooth top face contacting portion comprises at least one top opening.

8. The transparent orthodontic device of Claim 1, **characterized in that** the transparent orthodontic device does not comprise a tooth top face contacting portion.

9. The transparent orthodontic device of Claim 8, wherein the tooth side contacting portion comprises a tooth inner side contacting portion but does not comprise a tooth outer side contacting portion.

10. The transparent orthodontic device of Claim 8, wherein the tooth side contacting portion comprises a tooth outer side contacting portion but does not comprise a tooth inner side contacting portion.

11. A method for preparing a transparent orthodontic device, the method comprising a step of printing a transparent orthodontic device using a 3D printer, wherein the transparent orthodontic device comprises a tooth side contacting portion, the tooth side contacting portion comprising a concave tooth contacting portion and a convex tooth non-contacting portion which are disposed opposite each other.

12. The method for preparing a transparent orthodontic device of Claim 11, where, in step S10, a transparent orthodontic device whose top is at least partially open is printed.

13. The method for preparing a transparent orthodontic device of Claim 11, where, in step S10, a transparent orthodontic device whose top is entirely closed is printed, in which case the method further comprises a step S20 of at least partially opening up the top of the transparent orthodontic device.
